# EUROPÄISCHE PATENTSCHRIFT

(11) **EP 0 967 586 B1**
(45) Veröffentlichungstag und Bekanntmachung des Hinweises auf die Patenterteilung: **05.03.2003**
(21) Anmeldenummer: 98118565.5
(22) Anmeldetag: 01.10.1998
(51) Int. Cl.: G09B 19/08, G09B 3/02, G09B 1/02

(54) **Fremdsprachen-Lernvorrichtung**
Device for learning foreign languages
Dispositif d'apprentissage de langues etrangères

(30) Priorität: 25.06.1998 DE 19828407
(43) Veröffentlichungstag der Anmeldung: 29.12.1999
(73) Patentinhaber: Grabmayr, Josef, 83071 Schlossberg (DE)
(72) Erfinder: Grabmayr, Josef, 83071 Schlossberg (DE)
(74) Vertreter: Flach, Dieter Rolf Paul, Dipl.-Phys.

(56) Entgegenhaltungen:
- DE-A- 2 160 293
- GB-A- 2 248 961
- US-A- 4 802 855

## Beschreibung

Die Erfindung betrifft eine Fremdsprachen-Lernvorrichtung nach dem Oberbegriff des Anspruchs 1.

Es ist seit jeher üblich beim Erlernen vom Fremdsprachen sogenannte Vokabelhefte oder -bücher zu verwenden, in denen beispielsweise in einer linken Spalte die zu erlernenden Fremdwörter und in der rechten Spalte die muttersprachigen Heimatbegriffe und Übersetzungen wiedergegeben sind.

Obgleich heute auch weitere Medien wie Cassetten, CD's oder sogar audiovisuelle Medien zum Erlernen von Fremdsprachen mit zur Verfügung gestellt und eingesetzt werden können, kommt der traditionellen Lernmethode weiterhin die entscheidende Bedeutung zu.

Eine gattungsbildende Vorrichtung ist aus der US 4 802 855 bekannt geworden. Die vorbekannte Fremdsprachen-Lernvorrichtung ist buchförmig gestaltet, weist eine Vielzahl von Seiten auf, wobei auf jeder Seite auf einer linken Spalte untereinander jeweils ein Heimatbegriff wiedergegeben ist, und in der betreffenden Zeile des Heimatbegriffes rechts nebeneinanderliegend beispielsweise drei Etiketten aufgeklebt sind, die jeweils den fremdsprachlichen Begriff enthalten. Bei Bedarf können die einzelnen Etiketten entnommen und entsprechend ihrer Bedeutung an betreffenden Gegenständen in der Wohnung, auf Postern etc. aufgebracht werden. Bei jedem Sichtkontakt wird dadurch der Anwender erneut motiviert, sich an das jeweilige Wort zu erinnern.

Aufbau und Handhabung, einschließlich der Frage einer adäquaten Herstellung einer derartigen Fremdsprachen-Lernvorrichtung weisen allerdings Nachteile auf.

Eine Fremdsprachen-Lernvorrichtung in Form von Anzeigezetteln ist auch aus der DE 21 60 293 A bekannt geworden. Diese Anzeigezettel weisen eine Vorderseite auf, auf der Zeichen oder Worte aufgebracht werden können. Auf der Rückseite sind diese Anzeigezettel mit einer Klebeschicht versehen. Die Rückseite weistzwei durch eine Querlinie getrennte Rückseitenteile auf, wobei der eine Teil der Rückseite eine Klebeschicht trägt und der zweite Teil klebeschichtfrei gestaltet ist, um hier ebenfalls Zeichen oder Worte aufzubringen oder aufzudrucken.

Die Klebezettel können in dieser Form verwendet werden, da frontseitig die zu erlernenden Begriffe auf dem größeren Teil des Klebezettels aufgebracht sind, und der Lernende, wenn er die entsprechende Übersetzung in den fremdsprachlichen Begriff nicht weiß, den Klebezettel ergreifen und so umbiegen kann, dass der auf der Rückseite auf der klebefreien Schicht wiedergegebene fremdsprachliche Begriff gelesen werden kann. In einer beschriebenen Ausführungsform kann der entsprechende Klebezettel in dieser Weise so hergestellt sein, dass ein Drittel des Klebezettels nach hinten umgelegt und zusammengeklebt wird.

Diese Anzeigezettel sind alle gemeinsam in mehreren Reihen und Spalten nebeneinander auf eine Zetteltafel aufgeklebt, die aus einer biegsamen Trägerplatte aus Kunststoff oder Fasermaterial bestehen kann.

Aber auch diese Fremdsprachen-Datenvorrichtung weist Nachteile auf.

Aufgabe der vorliegenden Erfindung ist es von daher, eine verbesserte Fremdsprachen-Lernvorrichtung zu schaffen, die jedermann auf einfache Weise im Alltag des Erlernen von Fremdsprachen ermöglicht und erleichtert.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Erfindungsgemäß ist vorgesehen, dass die einzelnen Etiketten als Selbstklebeetiketten ausgebildet sind, die auf einem Etikettenträger, z.B. Ölpapier, aufgeklebt sein können. Besonders günstig ist dabei, dass die Etiketten mit einer Anfaßzone versehen sind, die auf dem Etikettenträger-Papier nicht klebt, da beispielsweise die Anfaßzone von Haus aus ohne Haft- oder Klebeschicht versehen ist, oder weil hier eine weitere die Haftschicht überdeckende Folie aufgeklebt ist.

In einer besonders bevorzugten Ausführungsform sind jeweils beschreib- und bedruckbare Papiere oder Seiten mit den aufgedruckten heimatsprachlichen Begriffen buch- oder heftähnlich zusammengebunden, wobei zwischen zwei derartigen mit den heimat- bzw. muttersprachlichen Begriffen beispielsweise in einer rechten Spalte versehenen bedruck- oder beschreibbaren Papieren jeweils mit geringerer Breite oder Ausschnitt ein Etikettenträger-Papier vorgesehen ist, auf welchem die entfernbaren selbstklebenden Etiketten mit den zu erlernenden Fremdsprachenbegriffen angeordnet sind.

Nachdem einzelne Begriffe erlernt sind, können die von den Gegenständen wieder entfernten Etiketten in dieser heftähnlichen Fremdsprachen-Lernvorrichtung wieder abgelegt werden. Um die entsprechende Zuordnung, wo diese Etiketten wieder abgelegt werden sollen, leichter vornehmen zu können, können auf jedem Etikett die zugehörigen Erläuterungen, also beispielsweise das entsprechende Wort in der deutschsprachigen Übersetzung oder eine Nummer etc. aufgedruckt sein, die Orientierungshilfe dafür gibt, wo dieses Etikett in der heft- oder buchähnlichen Vorrichtung wieder abgelegt werden kann. Es kann jedoch auch in dieser buchähnlichen Vorrichtung eingetragen werden, an welcher Stelle das jeweilige Etikett angebracht ist.

Es ist erfindungsgemäß auch vorgesehen, dass zusätzliche Informations- oder Etikettenträger verwendet werden können, auf denen die Etiketten - wenn sie mit einer Haftschicht versehen sind - aufgeklebt werden können, oder aber auf welchen die Etiketten beispielsweise in anderer Weise befestigt oder angebracht werden können, beispielsweise in eine Schlitzaufnehmung eingesteckt werden können. Diese Etiketten- oder Informationsträger können dann wiederum mit einer Haftschicht auf der Rückseite versehen sein oder mit anderen geeigneten Maßnahmen, um diese Etikettenträger an bestimmten Gegenständen mittels Schnüren, Drähten, Reißzwecken, Magneten etc. lösbar zu befestigen.

Die Erfindung wird nachfolgend anhand von Ausführungsbeispielen unter Bezugnahme auf die beigefügten Zeichnungen näher erläutert. Dabei zeigen im einzelnen
- Figur 1 :: eine schematische Ansicht einer Seite der erfindungsgemäßen Fremdsprachen-Lernvorrichtung;
- Figur 2 :: eine vergrößerte Detaildarstellung eines Einzeletikettes, wie es auf der in Figur 1 wiedergegebenen Seite unter Zwischenschaltung eines Etiketten-Trägers abgelegt ist;
- Figur 3 :: ein abgewandeltes Ausführungsbeispiel zu Figur 1 und 2 in schematischer Draufsicht;
- Figur 4 :: ein Etiketten- oder Informationshalter oder -träger in Draufsicht;
- Figur 5 :: eine Seitenansicht des Informations- oder Etikettenhalters oder -trägers gemäß Figur 4;
- Figur 6 :: ein zu Figur 4 abgewandeltes Ausführungsbeispiel in Draufsicht; und
- Figur 7 :: ein abgewandeltes Ausführungsbeispiel.

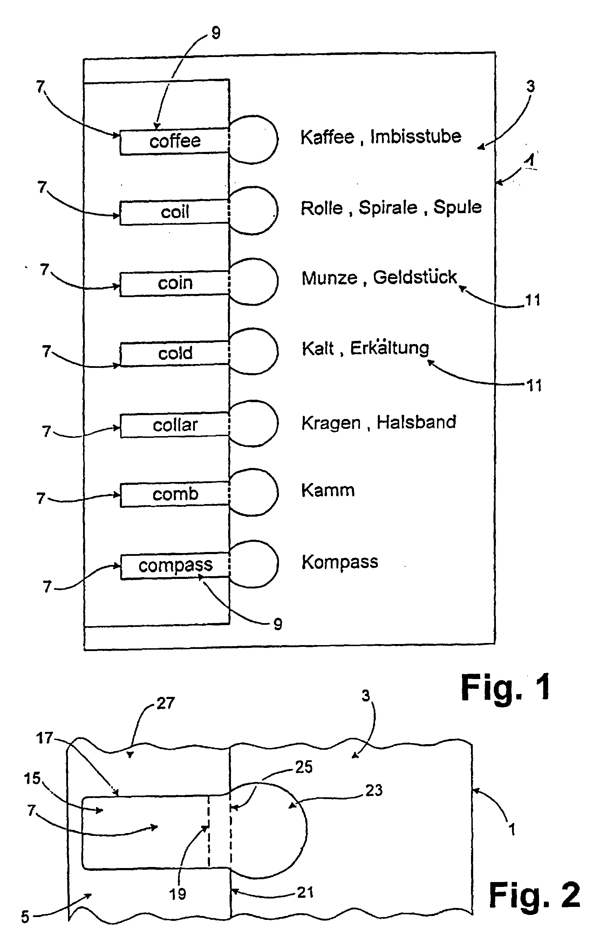

In Figur 1 ist eine Gesamtseite 1 einer vokabelheft- oder buchähnlichen Fremdsprachen-Lernvorrichtung dargestellt.

Diese Gesamtseite 1 umfasst ein mit den heimatsprachlichen, im gezeigten Ausführungsbeispiel deutschsprachigen Begriffen bedrucktes Papier, d.h. Papierbogen, welcher nachfolgend auch als P-Blatt 3 bezeichnet wird.

Auf der linken Seite der in Figur 1 dargestellten Gesamtseite 1 ist ein sich etwa über die gleiche Höhe des P-Blattes 3 erstreckendes, aber sehr viel schmäleres Etikettenträger-Blatt 5 vorgesehen, welches nachfolgend kurz als E-Blatt 5 bezeichnet wird. Jede der erwähnten Gesamtseiten 1 umfasst also zwei paarweise zueinander gehörende Blätter, nämlich jeweils ein E-Blatt 5 und ein darunter befindliches P-Blatt 3.

Auf den Etiketten-Blättern 5 sind in mehreren Reihen (Zeilen) untereinanderliegend jeweils bereits in diesem Ausführungsbeispiel voneinander getrennte Einzel-Etiketten 7, nämlich Selbstklebe- oder Haftetiketten 7 angebracht, auf denen die zu erlernenden Fremdsprachenbegriffe 9 aufgedruckt sind.

In der gleichen Reihe, aber nicht auf dem Etikettenträger-Blatt 5, sondern auf dem P-Blatt 3 eher rechts angeordnet, sind die den Fremdsprachenbegriffen 9 zugeordneten heimatsprachlichen, d.h. im gezeigten Ausführungsbeispiel deutschsprachigen, Begriffe 11 aufgedruckt. Insoweit ist die Aufmachung fast vergleichbar mit herkömmlichen Vokabelheften oder -büchern.

Wie sich insbesondere aus der vergrößerten Detaildarstellung gemäß Figur 2 ergibt, ist jedes Etikett 7 bevorzugt zweigliedrig gestaltet, und weist im gezeigten Ausführungsbeispiel eine eher rechteckförmige Textzone 15 auf, wobei die Unterseite der Textzone 15 die Klebezone 17 darstellen kann, worüber das Etikett 7 auf dem Etiketten-Blatt 5 anhaftend befestigt ist. Dabei kann die Klebezone 17, wie in Figur 2 dargestellt ist, etwa nur bis zu der gestrichelten Linie 19 reichen, also bereits vor dem rechten Rand 21 des Etikettenträger-Blattes 5 enden.

Im gezeigten Ausführungsbeispiel schließt sich an die Textzone 15 eine teilkreisförmig gestaltete Anfaßzone 23 an, die im gezeigten Ausführungsbeispiel noch optisch hervorgehoben ist, indem sie kreissegmentförmig rot bedruckt ist. Die Druckgrenze 25 der rotbedruckten Anfaßund Signalzone 23 stimmt in diesem Ausführungsbeispiel zumindest annähernd mit der Lage des rechten Randes 21 des E-Blattes 5 überein.

Die Anfaßzone 23 ist bevorzugt an der Unterseite nicht mit einer Haft- oder Klebeschicht versehen, so dass sie auf dem darunter befindlichen P-Blatt 3 nicht aufkleben kann. Insbesondere dann, wenn die gestrichelte Linie 19 vom rechten Rand des E-Blattes 5 nach links versetzt liegt ist gewährleistet, dass auch bei nicht exakter Positionierung das Etikett mit seiner Haftschicht stets vollflächig auf dem E-Blatt 5 anhaftend befestigt ist und keine Haftschicht auf dem Etikett rechts von rechten Rand 21 des E-Blattes 5 zu liegen kommt, und damit auch nicht auf dem darunter befindlichen P-Blatt 3 aufkleben kann.

Schließlich kann noch auf dem Etikett, in der Regel in kleinerer Schrift, auf der Vorderseite oder bei Bedarf auch auf der Rückseite ebenfalls noch der deutschsprachige Begriff oder beispielsweise eine Identifikationsnummer aufgedruckt sein, die es ermöglicht, ein einmal entferntes Etikett wieder an der richtigen Platzhalterstelle auf der zugehörigen Seite an dem ursprünglich für dieses Etikett mit dem betreffenden Begriff vorgesehenen Zone oder Reihe 27 abgelegt zu werden.

Nachfolgend wird auf die Funktionsweise kurz eingegangen.

Zum Erlernen der Begriffe können die jeweils gewünschten Etiketten aus der Fremdsprachen-Lernvorrichtung entnommen werden, indem das gewünschte Etikett an der Anfaßzone problemlos ergriffen, dann von dem Etikettenträger-Blatt 5 abgezogen und an dem betreffenden Gegenstand, z.B. in der Wohnung, aufgeklebt wird. Diese Begriffe begegnen einem tagtäglich und können so problemlos während des Tages beim ständigen Erblicken erlernt werden. Durch die optisch hervorgehobene Anfaßzone 23 erhöhen die Etiketten noch die Aufmerksamkeit.

Glaubt man den Begriff sicher erlernt zu haben, kann das betreffende Etikett von dem Gegenstand in der Wohnung wieder abgezogen und an dem ursprünglichen Platz in der Fremdsprachen-Lernvorrichtung wieder abgelegt werden. Den richtigen Ablegeplatz findet man dadurch leicht auf, dass beispielsweise (was in den Zeichnungen nicht näher dargestellt ist) auf dem Fremdsprachen-Etikett neben dem Begriff "coffee" klein, an geeigneter Stelle der Begriff "Kaffee" - "Imbiss-Stube" abgedruckt ist, und zwar äuf der Vorder- oder Rückseite (bevor auf den Etiketten herstellungsbedingt die Haftschicht aufgebracht wurde), oder dass beispielsweise in kleiner Größe eine Zahl (z.B. "256") aufgedruckt ist, und diese Zahl sich auf der betreffenden Seite unter dem deutschsprachigen Begriff oder an entsprechender Stelle auf dem Etikettenträger-Blatt 5 befindet. Möglich ist auch, dass unter oder neben der Position, auf der das Etikett haftet, das entsprechende Wort aufgedruckt ist, d.h. auf dem P-Blatt.

Unter Umständen können für bestimmte Lernbereiche, wie beispielsweise Autos, Reisen etc. plakatähnliche Druckbilder ("Poster")zur Verfügung gestellt werden, auf denen unterschiedliche Gegenstände oder Vorgänge beschreibende Darstellungen wiedergegeben sind, so dass die Etiketten dort richtig zugeordnet aufgeklebt werden können.

Um die Anbringung der Etiketten zu erleichtern und den Einsatzbereich zu vergrößern, können ferner aber auch noch neben den Etiketten auch Etiketten- oder Infoträger verwendet werden, die nachfolgend teilweise auch als Etiketten- oder Infohalter bezeichnet werden.

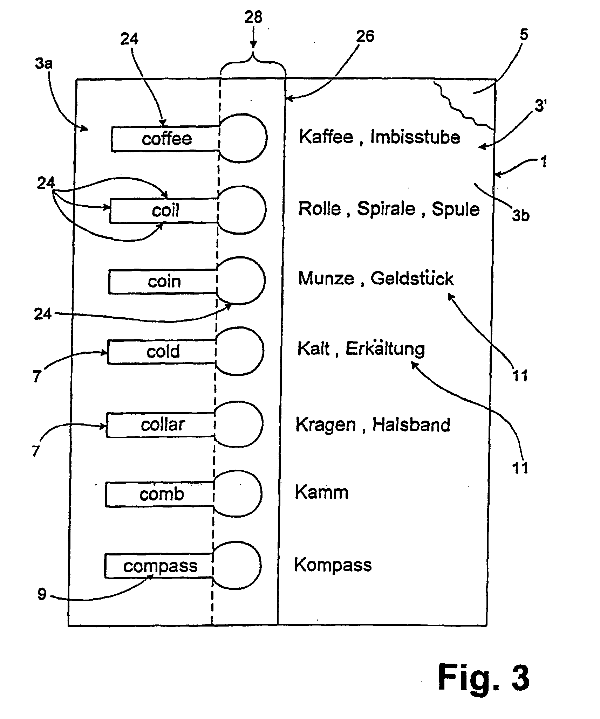

In Figur 3 ist eine zu Figur 1 und 2 dargestellte Variante der Erfindung gezeigt, bei welcher die Etiketten mit den aufgedruckten fremdsprachigen Begriffen (bzw, die beschrifteten Leeretiketten) und das dazugehörige Wort in der Muttersprache auf demselben selbstklebenden Papierbogen aufgebracht sind, wobei die Etiketten vorgeschnitten oder vorgestanzt sind und so ohne weiteres abgelöst werden können.

Bei dem Ausführungsbeispiel gemäß Figur 3 ist lediglich ein Etikettenträger-Blatt 5, nämlich ein sogenanntes E-Blatt 5, vorgesehen, auf welchem ein selbstklebender Papierbogen 3' oder eine selbstklebende Papierfolie 3' mehr oder weniger vollflächig aufgebracht ist.

Diese selbstklebende Papierfolie 3' ist auf der rechten Seite (rechten Spalte) wie im Ausführungsbeispiel nach Figur 1 in mehreren Zeilen untereinander mit entsprechend heimatsprachlichen Begriffen 11 (im gezeigten Ausführungsbeispiel in deutschsprachigen Begriffen) bedruckt.

Links sind die eigentlichen Etiketten 7 über eine Stanzoder Schnittlinie (oder Perforationslinie) 24 vorausgestanzt vorgesehen.

Bei Bedarf kann nunmehr längs der Stanzlinie 24 das jeweiligen Einzeletikett 7 abgelöst und von dem Etikettenträger-Blatt 5 abgehoben und bei Bedarf wieder auf diesem abgelegt werden, wie dies für das Ausführungsbeispiel gemäß Figur 1 und 2 erläutert wurde.

Damit einerseits die Etiketten 7 leichter abgenommen und andererseits später wieder leichter an der ursprünglichen Stelle auf dem Etikettenträger-Blatt 5 abgelegt werden können, wird der Bereich 3a der selbstklebenden Papierfolie 3' in einem Bereich um die Etiketten 7 herum vom Etikettenträger-Blatt 5 abgenommen. Zur Abgrenzung vom Bereich mit den heimatsprachlichen Begriffen 11 ist der entfernbare Teilbereich 3a des Selbstklebepapiers 3' von dem in Figur 3 rechtsliegenden Bereich mittels einer Schnitt- bzw. Stanzlinie 26 voreinander getrennt, wodurch die linksliegenden fremdsprachigen Begriffe von den rechtsliegenden heimatsprachlichen Begriffen getrennt werden (ohne dass das Etikettenträger-Blatt 5 auch durchtrennt ist). Die links von der Schnitt- oder Stanzlinie 26 liegende Teil 3a der selbstklebenden Papierfolie 3' kann also abgezogen werden, wobei die durch die Stanz- und Schnittlinien 24 getrennten Etiketten 7 selbst beim Abnehmen des Teiles 3a auf dem eigentlichen Etikettenträger-Blatt 5 weiter anhaften und zurückbleiben.

Um die Etiketten gleichwohl leichter von dem Etikettenträger-Blatt 5 abnehmen zu können und die Vorzüge der anhand von Figur 1 und 2 geschilderten Anfaßzone zu verwirklichen, ist bei dem Ausführungsbeispiel nach Figur 3 der Bereich 28, in welchem die Anfaßzonen 23 zu liegen kommen, entweder als nichtselbstklebender Bereich ausgebildet oder aber die Rückseite der Anfaßzone 23 ist mit einer weiteren Zwischenschicht versehen, um die selbstklebende Schicht unwirksam zu machen.

Bei diesem Ausführungsbeispiel besteht also somit jede Seite 1 nur aus einem im wesentlichen zweischichtigen Aufbau, nämlich aus dem als Etikettenträger-Blatt 5 bezeichneten Träger-Blatt 5, dem sogenannten E-Blatt 5, auf welchem sich die selbstklebende Papierfolie 3' mit dem linksliegenden entfernbaren Teil 3a, den in diesem Bereich durch Stanz- bzw. Schnittlinien befindlichen Etiketten 7 und einem rechts von einer Stanz- oder Schnittlinie 26 befindlichen Teil 3b besteht, der auf dem E-Blatt 5 dauerhaft ruht und auf dem die heimatsprachlichen Begriffe 11 aufgedruckt sind. Allenfalls kann im Bereich 28 ein zusätzlicher Papierstreifen oder eine Folie vorgesehen sein, um die dort vorgesehene Haftschicht auf der Rückseite der Etiketten 7 im Bereich der Anfaßzone unwirksam zu machen.

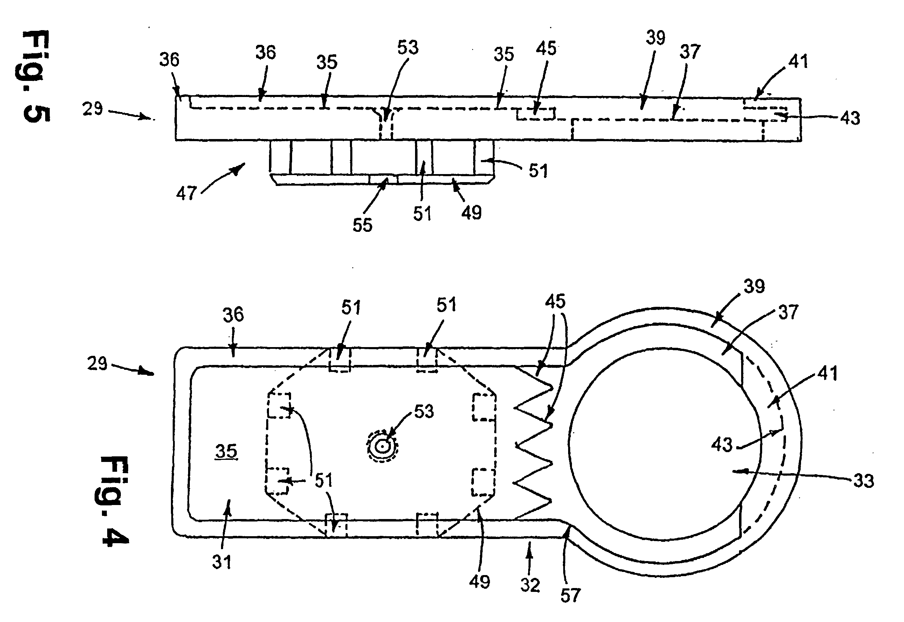

In Figur 4 und 5 ist in Draufsicht und in Seitenansicht ein derartiger, bevorzugt aus Kunststoff hergestellter (gegossener), Etikettenträger 29 dargestellt.

Er umfasst einen Informationsabschnitt 31, der im gezeigten Ausführungsbeispiel der Form der Textzone 15 entspricht. Daran schließt sich rechts ein Halterabschnitt 33 an, der kreisförmig gestaltet ist, und der teilkreisförmigen Anfaßzone 23 des Etiketts 7 entspricht.

Der Informationsabschnitt 31 kann vollflächig, d.h. mit einer geschlossenen Auflagefläche oder -platte 35 mit umlaufendem Rand 36 versehen sein, wobei der relativ rechts liegende Halterabschnitt 33 einen ring- oder rahmenförmigen Auflagerand 37 mit umlaufenden Begrenzungsrand 39 aufweist, der gegenüberliegend zum Informationsabschnitt 31 nach Art einer mit einer Überdeckung 41 gebildeten Nut 43 versehen ist.

Im Übergangsbereich 32 vom Informationsabschnitt 31 zum Halterabschnitt 33 ist der Übergang zickzackförmig gestaltet, d.h. dass die Auflagefläche 35 im Übergang zum Halterabschnitt 33 zunehmend weniger wird, im gezeigten Ausführungsbeispiel mittels spitz zulaufender Zungen 45. Dabei ist in der Seitenansicht gemäß Figur 5 auch zu ersehen, dass der Informationsabschnitt 31 eine höherliegende Auflagenfläche 35 aufweist als die sich daran anschließende Randfläche 37.

Einzelne Etiketten 7 können also aus der Fremdsprachen-Lernvorrichtung 1 entnommen und auf einem derartigen Informations- oder Etikettenhalter 29 aufgeklebt werden.

Da dieser Informations- oder Etikettenhalter 29 auf seiner Rückseite noch einen Verankerungsabschnitt 47 aufweist, der eine zum Informationsabschnitt 31 parallel verlaufende Befestigungsplatte 49 umfasst, die über mehrere, im gezeigten Ausführungsbeispiel acht Stelzen oder Streben 51 mit der Grundplatte des Informationsträgers verbunden sind, können z.B. Schnüre, Drähte etc. hindurchgesteckt und der Informations- bzw. Etikettenhalter 29 an bestimmten Gegenständen oder Möbeln problemlos angebracht werden. Ebenso kann der Informations- und Etikettenhalter 29 in dieser Befestigungsplatte 49 oder - wenn keine Befestigungsplatte 49 vorgesehen ist - an der Unterseite seines Informationsabschnittes mit Magneten versehen sein.

Um beispielsweise mittels Nägeln oder Häftzwecken eine Befestigung vorzunehmen, ist es sowohl im Informationsabschnitt 31 und damit fluchtend auf der Befestigungsplatte 49 jeweils eine Öffnung 53 bzw. 55 vorgesehen, um von oben her einen Nagel oder Reißzwecken hindurchzudrücken, um den Etikettenhalter so an einem Gegenstand zu befestigen.

Wenn ein Etikett aus der heftähnlichen Lernvorrichtung entnommen und mittels des Etikettenhalters an einem Gegenstand angebracht werden soll, wird das entnommene Etikett mit seiner Haft- oder Klebzone 17 auf den Informationsabschnitt 29 aufgeklebt, wobei die Anfaßzone 23 in dem Halterabschnitt 33 zu liegen kommt. Der rechte Rand der Anfaßzone 23 greift dabei in die erwähnte Nut 43 ein. Die grell bedruckte Anfaß- und Signalzone ist mit ihrer Aufmerksamkeit erregenden Farbe somit weiterhin gut sichtbar.

Der Etikettenhalter wird dabei an einen gewünschten Gegenstand befestigt.

Soll das Etikett - weil der Begriff erlernt ist - wieder entfernt werden, so kann von unten her durch die durch den umlaufenden Rand 37 gebildete Öffnung im Halterabschnitt 33 problemlos ein Finger hindurchgesteckt und die Anfaßzone 23 vom Halterabschnitt 33 nach oben abgehoben und ergriffen werden, wodurch das Etikett auch in der Klebezone problemlos vom Informationsabschnitt 31 abgehoben werden kann. Das Abheben wird dadurch erleichtert, dass in der Übergangszone 32 die Haftfläche durch die vielzahl der Zungen 45 erst langsam und kontinuierlich zunimmt, so dass das Etikett hier nicht einreißen kann. Zudem wird das Einreißen des Etiketts auch dadurch vermieden, dass die Begrenzungslinie 57 am Übergang von der Anfaßzone 23 zur Textzone 15 unter Vermeidung von Ecken und Kanten kontinuierlich übergeht.

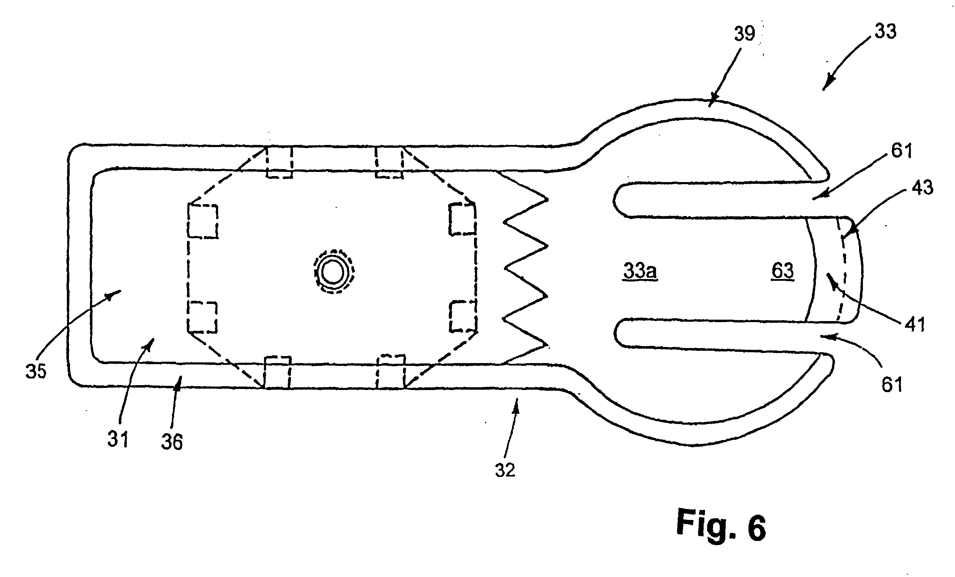

Bei dem Ausführungsbeispiel gemäß Figur 6 ist in Abweichung zum Ausführungsbeispiel gemäß Figuren 4 und 5 lediglich vorgesehen, dass der Halterabschnitt 33 mit einer mehr oder weniger geschlossenen Bodenfläche 33a versehen ist; in welche im gezeigten Ausführungsbeispiel jedoch zwei quer, zueinander versetzt liegende Längsausnehmungen 61 eingebracht sind, wodurch eine im Ausführungsbeispiel mittlere Längszunge 63 gebildet ist, an deren Ende wiederum eine Nut 43 ausgebildet ist. Soll ein hier aufgeklebtes Etikett wieder entfernt werden, so kann die Längszunge 63 problemlos nach unten oder oben weggebogen werden, um den Rand der Anfaßzone 23 wieder freizugeben, um das Etikett anzufassen und abzuziehen.

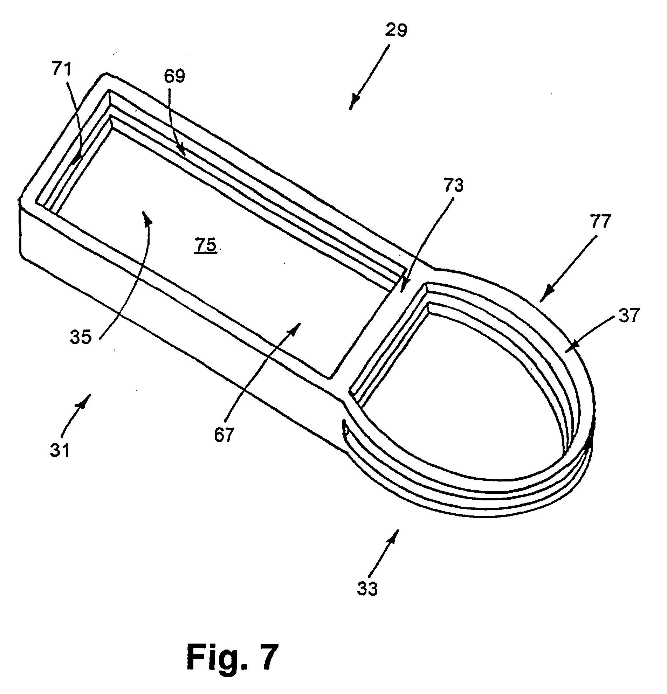

Anhand von Figur 7 ist schematisch gezeigt, dass hier ein Informations- oder Etikettenhalter 29 verwendet wird, der im Bereich des Informationsabschnittes 31 einen Sichtabschnitt 67 aufweist, welcher gegenüberliegend mit Längsnuten 69 und an seinem Ende beispielsweise mit einer Quernut 71 versehen ist. Auch am Übergang vom Informationszum Halterabschnitt kann eine brückenähnliche Überdeckung 73 vorgesehen sein, wodurch eine rahmenförmige Einfassung und damit ein Fenster 75 oberhalb der Bodenfläche 35 im Informationsabschnitt 31 gebildet ist. Dieser Informations- oder Etikettenträger eignet sich vor allem für nichtselbsthaftende Etiketten, die einzeln in diesem Ausführungsbeispiel z.B. von rechts her in diesen Etikettenträger über einen Querschlitz eingeschoben werden können, wobei die Textzone 15 unterhalb des Fensters 75 zu liegen kommt und durch die beiden Längsnuten 69 und die Quernut 71, wie aber auch die brückenähnliche Überdeckung 73, gehalten wird. Ebenso kann im Halterabschnitt zumindest bis zum Halbkreisdurchmesser 77 eine teilkreisförmige Nut am Rand 37 ausgebildet sein. Ebenso kann zusätzlich der gleiche Verankerungsabschnitt 47 vorgesehen sein, wie im Zusammenhang mit Figur 4 und 5 erläutert wurde.

Werden derartige nichtselbstklebende Etiketten verwendet, so werden diese bevorzugt in einem ebenfalls vokabelheftähnlichen Buch zur Verfügung gestellt, wobei diese Etiketten bereits bevorzugt voneinander zumindest insoweit getrennt sind, dass sie nur noch über einen gemeinsamen Halte- oder Befestigungsabschnitt (beispielsweise längs einer gekennzeichneten oder zumindest vorperforierten Linie) problemlos aus dem Vokabelheft entnommen werden und in geeigneter Weise an betreffenden, dem Begriff entsprechenden Gegenständen angebracht werden können, z.B. unter Verwendung der zuletzt erläuterten Informations- und Etikettenhalter. Nachteil der zuletzt geschilderten Methode ist jedoch, dass die Begriffe - wenn sie erlernt wurden und von den Gegenständen wieder abgenommen werden sollen - nicht ohne weitere Hilfsmaßnahmen wieder an der ursprünglichen Stelle in der Fremdsprachen-Lernvorrichtung, also auf einer betreffenden Seite abgelegt werden können.

Der Vollständigkeit halber wird auch erwähnt, dass natürlich die einzelnen Etiketten bereits von Haus aus getrennt zur Verfügung gestellt werden können, beispielsweise in einer Art Etikettenbox oder -schachtel, wo sie einzeln entnommen werden können. Dabei kann auch vorgesehen sein, dass nur diese Etiketten (selbstklebend und nichtselbstklebend) vorgesehen sind, indem der zu erlernende Fremdsprachenbegriff z.B. größer oder andersfarbig herausgestellt ist und bei welchem der deutschsprachige, alsö heimatsprachliche Begriff nur klein auf der Vorderseite oder beispielsweise auf der Rückseite wiedergegeben ist. Insoweit können dann, im gezeigten Ausführungsbeispiel gemäß Figur 1, auch die sogenannten P-Blätter 3 entfallen, da dann nur noch die Etiketten selbst oder die Etiketten auf dem Etikettenträger-Blatt 5 vorgesehen sind, bei Bedarf entnommen und wieder dort abgelegt werden können, ohne dass separate Maßnahmen und Einrichtungen vorgesehen sind, auf denen die deutschsprachigen Begriffe vergleichbar groß abgedrucktsind.

Abschließend wird darauf hingewiesen, dass die in der vorliegenden Anmeldung beschriebenen und in den Zeichnungen dargestellten Etiketten, insbesondere die anhand der Figuren 1 bis 3 dargestellten Etiketten, auch zumindest ergänzend in Form von sogenannten "Leer-Etiketten" vorgesehen sein können. Dies eröffnet die Möglichkeit, nachträglich noch weitere Worte oder beispielsweise spezielle Fachbegriffe nachzutragen und in die zu erlernenden Vokabeln aufzunehmen. Die Ergänzung kann handschriftlich vorgenommen werden, könnte beispielsweise aber auch über eine (elektrische) Schreibmaschine oder vor allem einen Drucker erfolgen, wobei die Eingabe und der Druck der noch fehlenden Begriffe auf den Etiketten mittels eines Computers vorgenommen werden kann.

## Patentansprüche

1. Fremdsprachen-Lernvorrichtung, insbesondere in Form einer vokabelheft- oder buchähnlichen Aufmachung unter Wiedergabe der zu erlernenden fremdsprachlichen Begriffe, mit den folgenden Merkmalen
- es ist ein Etikettenträger-Blatt (5) vorgesehen,
- auf dem Etikettenträger-Blatt (5) sind selbstklebende Haftetiketten (7) vorgesehen,
- auf den Haftetiketten (7) sind einzelne zu erlernende fremdsprachliche Begriffe oder Begriffsgruppen, Sätze oder Satzteile wiedergegeben,
- es sind in geeigneter räumlicher Zuordnung zu den Haftetiketten (7) noch die bezüglich der auf den Haftetiketten (7) wiedergegebenen und zu erlernenden Fremdsprachenbegriffe die heimatsprachlichen Begriffe wiedergegeben,
- die Haftetiketten (7) sind auf ihrer Rückseite so ausgebildet, dass sie nur mit einer Teilfläche bezogen auf ihre gesamte Rückfläche haftend auf dem Etikettenträger-Blatt (5) sitzen, und
- die Haftetiketten (7) sind auf ihrer Rückseite mit einem nicht haftenden Abschnitt versehen, der bis zum Rand der Haftetiketten (7) reicht, wodurch ein mit dem Etikettenträger-Blatt (5) unverbundener Greifabschnitt gebildet ist,
**gekennzeichnet durch** die folgenden weiteren Merkmale :
- es ist ferner neben dem Etikettenträger-Blatt (5) ein bedruckbares Blatt (3, 3') vorgesehen,
- auf dem bedruckbaren Blatt (3, 3') sind die heimatsprachlichen Begriffe wiedergegeben, und
- das mit den heimatsprachlichen Begriffen bedruckte Blatt (3, 3') ist vor oder hinter dem betreffenden Etikettenträger-Blatt (5) mit den hierauf befindlichen Haftetiketten (7) mit den den heimatsprachlichen Begriffen entsprechenden fremdsprachlichen Begriffen oder als selbstklebende Papierfolie (3') auf dem Etikettenträger-Blatt (5) anhaftend vorgesehen, und
- das bedruckbare Blatt (3, 3') mit den darauf wiedergegebenen heimatsprachlichen Begriffen sowie das Etikettenträger-Blatt (5) mit den darauf befindlichen Haftetiketten (7) mit den fremdsprachlichen Begriffen sind so dimensioniert, dass sowohl die heimatsprachlichen Begriffe auf dem bedruckten Blatt (3, 3') als auch die Haftetiketten (7) mit den darauf wiedergegebenen fremdsprachlichen Begriffen gleichzeitig betrachtbar sind.

2. Fremdsprachen-Lernvorrichtung nach Anspruch 1, **dadurch gekennzeichnet, dass** die Haftetiketten (7) zumindest zweigegliedert sind und eine Textzone (15) und eine Anfaßzone (23) umfassen.

3. Fremdsprachen-Lernvorrichtung nach Anspruch 2, **dadurch gekennzeichnet, dass** die Haft- oder Klebezone (17) zumindest annähernd der Größe und Lage der Textzone (15) entspricht.

4. Fremdsprachen-Lernvorrichtung nach einem der Ansprüche 1 bis 3, **dadurch gekennzeichnet, dass** die Haftetiketten (7) zumindest mit einem Abschnitt über das sie tragende Etikettenträger-Blatt (5) seitlich überstehen.

5. Fremdsprachen-Lernvorrichtung nach einem der Ansprüche 1 bis 4, **dadurch gekennzeichnet, dass** ein über das Etikettenträger-Blatt (5) überstehender Abschnitt der Haftetiketten (7) an der rückwärtigen Seite keine Haft- oder Klebeschicht aufweist.

6. Fremdsprachen-Lernvorrichtung nach einem der Ansprüche 1 bis 5, **dadurch gekennzeichnet, dass** ein über das Etikettenträger-Blatt (5) oder einen Ausschnitt des Etikettenträger-Blattes (5) überstehender Abschnitt der Haftetiketten (7), der zumindest im überstehenden Bereich auf der Rückseite mit einer Haft- oder Klebeschicht (17) versehen ist, mit einer aufgebrachten Folie überdeckt ist.

7. Fremdsprachen-Lernvorrichtung nach einem der Ansprüche 1 bis 6, **dadurch gekennzeichnet, dass** der zumindest eine auf dem Etikettenträgerblatt (5) nicht haftende Greifabschnitt auf der Rückseite der Haftetiketten (7) keine Haft- und Klebeschicht aufweist oder mittels einer auf die Haft- und Klebeschicht übergeklebte Folie unwirksam gemacht wird.

8. Fremdsprachen-Lernvorrichtung nach einem der Ansprüche 1 bis 7, **dadurch gekennzeichnet, dass** die bedruckbaren, die heimatsprachlichen Begriffe wiedergebenden Blätter (3) größer dimensioniert sind als die Etikettenträger-Blätter (5), so dass bei frontseitiger Betrachtung die mit den fremdsprachlichen Begriffen versehenen Haftetiketten (7) zu den auf den bedruckbaren Blättern (3) wiedergegebenen heimatsprachlichen Begriff seitlich versetzt zueinander liegen.

9. Fremdsprachen-Lernvorrichtung nach einem der Ansprüche 1 bis 8, **dadurch gekennzeichnet, dass** die heimatsprachlichen Begriffe (11) auf einer selbstklebenden Papierfolie (3') abgedruckt sind und die Haftetiketten (7) Teile dieser selbstklebenden Papierfolie (3') darstellen, wobei die Etiketten (7) mit der gesamten selbstklebenden Papierfolie (3') auf einem Etikettenträger-Blatt (5) anhaften, und dass die Haftetiketten (7) mittels einer sie umgebenden Stanz-, Schnitt- oder Perforationslinie (24), unabhängig von der selbstklebenden Papierfolie (3'), von dem Etikettenträger-Blatt (5) abnehmbar oder darauf wiederum ablegbar sind.

10. Fremdsprachen-Lernvorrichtung nach Anspruch 9, **dadurch gekennzeichnet, dass** die selbstklebende Papierfolie (3') einen Trenn- oder Stanzschnitt (26) umfasst, wodurch der die Haftetiketten (7) aufnehmende Bereich (3a) von dem mit den heimatsprachlichen Begriffen (11) bedruckte Bereich (3b) getrennt ist, und dass der die Haftetiketten (7) aufnehmende Bereich (3a) der selbstklebenden Papierfolie (3') unter Zurückbelassung der Haftetiketten (7) auf dem Etikettenträger-Blatt (5) entfernbar ist, wozu die Haftetiketten (7) über eine Stanz-, Schnitt- oder Perforationslinie (24) von der sie umgebenden selbstklebenden Papierfolie (3') oder dem zugehörigen Teil (3a) der selbstklebenden Papierfolie (3') getrennt sind.

11. Fremdsprachen-Lernvorrichtung nach einem der Ansprüche 1 bis 10, **dadurch gekennzeichnet, dass** auf dem Etikettenträger-Blatt (5) ein Bereich oder Streifen (28) vorgesehen bzw. ausgebildet ist, in welchem die Anfaßzonen (23) zu liegen kommen, die mit keiner Haftschicht versehen sind oder bei welchen eine die Haftschicht überdeckende Zwischenfolie vorgesehen ist.

12. Fremdsprachen-Lernvorrichtung nach einem der Ansprüche 1 bis 11, **dadurch gekennzeichnet, dass** die Anfaßzone (23) der Haftetiketten (7) von der Form und/oder Größe zur Höhen- oder Querabmessung der Textzone (15) der Haftetiketten (7) abweichend gestaltet ist.

13. Fremdsprachen-Lernvorrichtung nach einem der Ansprüche 1 bis 12, **dadurch gekennzeichnet, dass** die Anfaßzone (23) von der Textzone (15) abweichend farblich gestaltet ist.

14. Fremdsprachen-Lernvorrichtung nach einem der Ansprüche 1 bis 13, **dadurch gekennzeichnet, dass** ferner Informations- und/oder Etikettenhalter oder -träger (29) vorgesehen sind, auf welchen die Haftetiketten (7) wieder lösbar befestigbar sind.

15. Fremdsprachen-Lernvorrichtung nach Anspruch 14, **dadurch gekennzeichnet, dass** die Informations- oder Etikettenhalter (29) vorzugsweise aus Kunststoff bestehen.

16. Fremdsprachen-Lernvorrichtung nach Anspruch 14 oder 15, **dadurch gekennzeichnet, dass** die Informations- oder Etikettenhalter (29) einen Informationsabschnitt (31) und einen Halterabschnitt (33) aufweisen, wobei der Informationsabschnitt von Form und Größe an die Form und Größe der Textzone (15) der Haftetiketten (7) angepasst ist.

17. Fremdsprachen-Lernvorrichtung nach einem der Ansprüche 14 bis 16, **dadurch gekennzeichnet, dass** der Halterabschnitt (33) der Informations- oder Etikettenhalter (29) in Größe und Form der Anfaßzone (23) der Haftetiketten (7) angepasst ist.

18. Fremdsprachen-Lernvorrichtung nach einem der Ansprüche 14 bis 17, **dadurch gekennzeichnet, dass** der Informationsabschnitt (31) mit einer Bodenfläche (35) versehen ist, und der Halterabschnitt (33) rückwärtig zumindest teilweise offen gestaltet ist.

19. Fremdsprachen-Lernvorrichtung nach einem der Ansprüche 14 bis 18, **dadurch gekennzeichnet, dass** im Bereich des Halterabschnittes (33) zumindest im Teilumfangsbereich Nuten (43) vorgesehen sind, die zumindest abschnittsweise den Rand der zu fixierenden Haftetiketten (7), vorzugsweise den Rand der Anfaßzone (23) übergreift.

20. Fremdsprachen-Lernvorrichtung nach einem der Ansprüche 14 bis 19, **dadurch gekennzeichnet, dass** im Übergangsbereich (32) vom Informationsabschnitt (31) zum Halterabschnitt (33) die Bodenfläche des Informationsabschnittes (31) zur Auflagefläche (37) im Halterabschnitt (33) erhaben angeordnet ist und im Übergangsbereich die erhabene Fläche in Richtung Halterabschnitt (33) in einen oder mehreren nebeneinander sitzenden dreieckförmigen verjüngten Abschnitten (45) ausläuft.

21. Fremdsprachen-Lernvorrichtung nach einem der Ansprüche 14 bis 20, **dadurch gekennzeichnet, dass** der Informations- oder Etikettenhalter (29) an mehreren seiner Seiten mit längs- und/oder querverlaufenden Nuten (69, 71) versehen ist, worüber nichthaftende Haftetiketten (7) einsteckbar gehalten sind.

22. Fremdsprachen-Lernvorrichtung nach Anspruch 21, **dadurch gekennzeichnet, dass** der Informations- oder Etikettenhalter (29) ein Fenster (75) aufweist, an welchem umlaufend Nuten (69, 71) oder überbrückende Stege (73) unter Aufnahme eines blattförmigen Haftetiketts (7) ausgebildet sind.

23. Fremdsprachen-Lernvorrichtung nach einem der Ansprüche 14 bis 22, **dadurch gekennzeichnet, dass** die Informationsund/oder Etikettenhalter oder -träger (29) auf ihrer Rückseite noch einen Verankerungsabschnitt (47), vorzugsweise mit einer parallel zum Informationsabschnitt (31) verlaufenden Befestigungsplatte (49) umfassen.

24. Fremdsprachen-Lernvorrichtung nach Anspruch 23, **dadurch gekennzeichnet, dass** die Befestigungsplatte (49) über mehrere Stelzen oder Streben (51) mit der Grundplatte des Informations- und/oder Etikettenhalters oder -trägers (29) verbunden ist, und dass in der Befestigungsplatte (49) vorzugsweise zumindest eine weitere Öffnung vorgesehen ist.

25. Fremdsprachen-Lernvorrichtung nach einem der Ansprüche 1 bis 24, **dadurch gekennzeichnet, dass** die Haftetiketten (7) und/oder die Informations- und/oder Etikettenhalter oder -träger (29) als beschreib- oder bedruckbare Leer-Etiketten oder Leer-Informations- oder Leer-Etikettenhalter oder -träger ausgebildet sind.

## Claims

1. Foreign-language learning device, in particular in the form of vocabulary-folder-like or book-like configuration with a reproduction of the foreign-language terms to be learnt, having the following features:
- a label-carrier sheet (5) is provided,
- self-adhesive labels (7) are provided on the label-carrier sheet (5),
- individual foreign-language terms or groups of terms, sentences or parts of sentences to be learnt are reproduced on the adhesive labels (7),
- the terms in the user's own language which relate to the foreign-language terms which are reproduced on the adhesive labels (7) and are to be learnt are also reproduced in a suitable spatial assignment to the adhesive labels (7),
- the adhesive labels (7) are formed on their rear side in such a way that they are seated in an adhesive fashion on the label-carrier sheet (5) only with a part of their entire rear area, and
- the adhesive labels (7) are provided on their rear side with a non-adhesive section which extends as far as the edge of the adhesive labels (7), forming a gripping section which is not connected to the label-carrier sheet (5),
**characterized by** the following features:
- in addition to the label-carrier sheet (5), a printable sheet (3, 3') is also provided,
- the terms in the user's own language are reproduced on the printable sheet (3, 3'), and
- the sheet (3, 3') which is printed with the terms in the user's own language is provided, in front of or behind the respective label-carrier sheet (5), with the adhesive labels (7) which are located thereon and which have the foreign-language terms corresponding to the terms in the user's own language, or are provided adhered to the label-carrier sheet (5) as self-adhesive paper film (3'), and
- the printable sheet (3, 3') with the terms in the user's own language reproduced thereon and the label-carrier sheet (5) with the adhesive labels (7) with the foreign-language terms which are located thereon are dimensioned in such a way that both the terms in the user's own language on the printed sheet (3, 3') and the adhesive labels (7) with the foreign-language terms reproduced thereon can be viewed simultaneously.

2. Foreign-language learning device according to Claim 1, **characterized in that** the adhesive labels (7) are divided at least in two and comprise a text zone (15) and a gripping zone (23).

3. Foreign-language learning device according to Claim 2, **characterized in that** the adhesive zone (17) corresponds at least approximately to the size and position of the text zone (15).

4. Foreign-language learning device according to one of Claims 1 to 3, **characterized in that** the adhesive labels (7) protrude laterally at least with a section beyond the label-carrier sheet (5) which bears them.

5. Foreign-language learning device according to one of Claims 1 to 4, **characterized in that** a section of the adhesive labels (7) which protrudes beyond the label-carrier sheet (5) has no adhesive layer on the rear side.

6. Foreign-language learning device according to one of Claims 1 to 5, **characterized in that** a section of the adhesive labels (7) which protrudes beyond the label-carrier sheet (5) or a portion of the label-carrier sheet (5) and which is provided with an adhesive layer (17) at least in the protruding region on the rear side is covered with an applied film.

7. Foreign-language learning device according to one of Claims 1 to 6, **characterized in that** the at least one gripping section which does not adhere to the label-carrier sheet (5) does not have any adhesive layer on the rear side of the adhesive labels (7) or is made ineffective by means of a film which is adhered over the adhesive layer.

8. Foreign-language learning device according to one of Claims 1 to 7, **characterized in that** the printable sheets (3) which reproduce the terms in the user's own language have larger dimensions than the label-carrier sheets (5) so that when viewed from the front the adhesive labels (7) which are provided with the foreign-language terms are offset laterally with respect to the terms in the user's own language which are reproduced on the printable sheets (3).

9. Foreign-language learning device according to one of Claims 1 to 8, **characterized in that** the terms (11) in the user's own language are printed on a self-adhesive paper film (3') and the adhesive labels (7) constitute parts of this self-adhesive paper film (3'), the labels (7) adhering with the entire self-adhesive paper film (3') on a label-carrier sheet (5), and **in that** the adhesive labels (7) can be removed from the label-carrier sheet (5), or placed on it again, independently of the self-adhesive paper film (3'), by means of a punched, cut or perforated line (24) which surrounds said adhesive labels (7).

10. Foreign-language learning device according to Claim 9, **characterized in that** the self-adhesive paper film (3') comprises a separation line or punched line (26), by means of which the region (3a) which accommodates the adhesive labels (7) is separated from the region (3b) which is printed with the terms (11) in the user's own language, and **in that** that region (3a) of the self-adhesive paper film (3') which accommodates the adhesive labels (7) can be removed leaving behind the adhesive labels (7) on the label-carrier sheet (5), for which purpose the adhesive labels (7) are separated, by means of a punched, cut or perforated line (24), from the self-adhesive paper film (3') which surrounds them or from the associated part (3a) of the self-adhesive paper film (3').

11. Foreign-language learning device according to one of Claims 1 to 10, **characterized in that** a region or strip (28) is provided or formed on the label-carrier sheet (5), in which region or strip (28) the gripping zones (23) which are provided with no adhesive layer or in which an intermediate film which covers the adhesive layer is provided come to rest.

12. Foreign-language learning device according to one of Claims 1 to 11, **characterized in that** the gripping zone (23) of the adhesive labels (7) is designed so as to differ from the shape and/or size of the text zone (15) of the adhesive labels (7) in terms of the height or lateral dimensions.

13. Foreign-language learning device according to one of Claims 1 to 12, **characterized in that** the gripping zone (23) is coloured differently from the text zone (15).

14. Foreign-language learning device according to one of Claims 1 to 13, **characterized in that**, in addition, information and/or label holders or carriers (29) on which the adhesive labels (7) can be detachably fastened again are provided.

15. Foreign-language learning device according to Claim 14, **characterized in that** the information or label holders (29) are preferably composed of plastic.

16. Foreign-language learning device according to Claim 14 or 15, **characterized in that** the information or label holders (29) have an information section (31) and a holder section (33), the shape and size of the information section being adapted to the shape and size of the text zone (15) of the adhesive labels (7).

17. Foreign-language learning device according to one of Claims 14 to 16, **characterized in that** the holder section (33) of the information or label holders (29) is adapted in terms of size and shape to the gripping zone (23) of the adhesive labels (7).

18. Foreign-language learning device according to one of Claims 14 to 17, **characterized in that** the information section (31) is provided with a bottom face (35) and the holder section (33) is designed so as to be at least partially open at the rear.

19. Foreign-language learning device according to one of Claims 14 to 18, **characterized in that** grooves (43) are provided in the region of the holder section (33), at least over part of its circumference, which grooves (43) engage over at least part of the edge of the adhesive labels (7) to be secured, preferably the edge of the gripping zone (23).

20. Foreign-language learning device according to one of Claims 14 to 19, **characterized in that**, in the junction region (32) between the information section (31) and the holder section (33), the bottom face of the information section (31) is arranged raised with respect to the supporting face (37) in the holder section (33), and in the junction region the raised face runs in the direction of the holder section (33), ending in one or more triangular, tapered sections (45) which are seated next to one another.

21. Foreign-language learning device according to one of Claims 14 to 20, **characterized in that** the information or label holder (29) is provided on a plurality of its sides with longitudinally extending and/or transversely extending grooves (69, 71), by means of which non-adhering adhesive labels (7) can be held in an insertable fashion.

22. Foreign-language learning device according to Claim 21, **characterized in that** the information or label holder (29) has a window (75) on which peripheral grooves (69, 71) or cross-connecting webs (73) are formed so as to receive a sheet-like adhesive label (7).

23. Foreign-language learning device according to one of Claims 14 to 22, **characterized in that** the information and/or label holders or carriers (29) also comprise, on their rear side, an anchoring section (47), preferably with an attachment panel (49) which runs parallel to the information section (31).

24. Foreign-language learning device according to Claim 23, **characterized in that** the attachment panel (49) is connected to the base plate of the information and/or label holder or carrier (29) by means of a plurality of uprights or struts (51), and **in that** preferably at least one further opening is provided in the attachment panel (49).

25. Foreign-language learning device according to one of Claims 1 to 24, **characterized in that** the adhesive labels (7) and/or the information and/or label holders or carriers (29) are embodied as blank labels which can be written on or printed or blank information or blank label holders or carriers.

## Revendications

1. Dispositif d'apprentissage de langues étrangères, en particulier sous forme de présentation de cahier vocabulaire ou de livre en reproduisant les expressions en langue étrangère à apprendre, présentant les éléments suivants :
- on prévoit une feuille porte-étiquette (5),
- sur la feuille porte-étiquette (5) sont prévues des étiquettes adhésives autocollantes (7),
- sur les étiquettes adhésives (7) sont reproduits des expressions en langue étrangère individuelles à apprendre ou des groupes d'expressions, des phrases ou des parties de phrases,
- les expressions en langue maternelle sont reproduites, en association appropriée dans l'espace aux étiquettes adhésives (7), en plus des expressions en langue étrangère à apprendre et reproduites sur les étiquettes adhésives (7),
- les étiquettes adhésives (7) sont réalisées de telle sorte sur leur face arrière qu'elles reposent avec adhésion sur la feuille porte-étiquettes (5) uniquement avec une surface partielle par rapport à leur surface arrière totale, et
- les étiquettes adhésives (7) sont pourvues, sur leur face arrière, d'un tronçon non adhésif qui s'étend jusqu'au bord des étiquettes adhésives (7), dont résulte un tronçon de préhension non relié à la feuille porte-étiquette (5),
**caractérisé par** les autres éléments suivants :
- une feuille (3, 3') susceptible d'être imprimée est prévue en outre à côté de la feuille porte-étiquette (5),
- les expressions en langue maternelle sont reproduites sur la feuille susceptible d'être imprimée (3, 3'), et
- la feuille (3, 3') imprimée avec les expressions en langue maternelle est prévue avec adhésion sur la feuille porte-étiquette (5), en avant ou en arrière de la feuille porte-étiquette correspondante (5) avec les étiquettes adhésives (7) situées sur celle-ci avec les expressions en langue étrangère correspondantes aux expressions en langue maternelle, ou bien sous forme de feuille en papier autocollante (3'), et
- la feuille susceptible d'être imprimée (3, 3') avec les expressions en langue maternelle reproduites sur celle-ci ainsi que la feuille porte-étiquette (5) avec les étiquettes adhésives (7) situées sur celle-ci avec les expressions en langue étrangère sont dimensionnées de telle sorte qu'aussi bien les expressions en langue maternelle sur la feuille imprimée (3, 3') que les étiquettes adhésives (7) avec les expressions en langue étrangère reproduites sur celles-ci peuvent être observées simultanément.

2. Dispositif d'apprentissage de langues étrangères selon la revendication 1, **caractérisé en ce que** les étiquettes adhésives (7) sont subdivisées au moins en deux parties et comprennent une zone de texte (15) et une zone de préhension (23).

3. Dispositif d'apprentissage de langues étrangères selon la revendication 2, **caractérisé en ce que** la zone adhésive ou collante (17) correspond au moins approximativement à la taille et à la position de la zone de texte (15).

4. Dispositif d'apprentissage de langues étrangères selon l'une des revendications 1 à 3, **caractérisé en ce que** les étiquettes adhésives (7) dépassent latéralement par au moins un tronçon au-delà de la feuille porte-étiquettes (5) qui les porte.

5. Dispositif d'apprentissage de langues étrangères selon l'une des revendications 1 à 4, **caractérisé en ce qu'**un tronçon des étiquettes adhésives (7), lequel dépasse au-delà de la feuille porte-étiquettes (5) ne présente pas de couche adhésive ou collante sur le côté arrière.

6. Dispositif d'apprentissage de langues étrangères selon l'une des revendications 1 à 5, **caractérisé en ce qu'**un tronçon des étiquettes adhésives (7), lequel dépasse au-delà de la feuille porte-étiquettes (5) ou au-delà d'une partie de la feuille porte-étiquettes (5) et qui est pourvu d'une couche adhésive ou collante (17) au moins dans la zone dépassant sur le côté arrière, est recouvert d'une feuille appliquée.

7. Dispositif d'apprentissage de langues étrangères selon l'une des revendications 1 à 6, **caractérisé en ce que** ledit au moins un tronçon de préhension non adhérant sur la feuille porte-étiquettes (5) ne présente pas de couche adhésive et collante sur le côté arrière des étiquettes adhésives (7) ou est rendu inefficace au moyen d'une feuille collée sur la couche adhésive et collante.

8. Dispositif d'apprentissage de langues étrangères selon l'une des revendications 1 à 7, **caractérisé en ce que** les feuilles (3) susceptibles d'être imprimées et reproduisant les expressions en langue maternelle sont dimensionnées plus grandes que les feuilles porte-étiquettes (5), de sorte que lors d'une observation du côté frontal les étiquettes adhésives (7) pourvues des expressions en langue étrangère sont situées latéralement en décalage par rapport à l'expression en langue maternelle reproduite sur les feuilles (3) susceptibles d'être imprimées.

9. Dispositif d'apprentissage de langues étrangères selon l'une des revendications 1 à 8, **caractérisé en ce que** les expressions en langue maternelle (11) sont imprimées sur une feuille de papier autocollante (3') et les étiquettes adhésives (7) représentent des parties de cette feuille de papier autocollante (3'), les étiquettes (7) adhérant avec toute la feuille de papier autocollante (3') sur une feuille porte-étiquettes (5), et **en ce que** les étiquettes adhésives (7) peuvent être enlevées de la feuille porte-étiquettes (5) ou être reposées sur celle-ci au moyen d'une ligne poinçonnée, coupée ou perforée (24) qui les entoure, et ceci indépendamment de la feuille de papier autocollante (3').

10. Dispositif d'apprentissage de langues étrangères selon la revendication 9, **caractérisé en ce que** la feuille de papier autocollante (3') comprend une coupe de séparation ou poinçonnée (26), par laquelle la zone (3a) recevant les étiquettes adhésives (7) est séparée de la zone (3b) imprimée avec les expressions en langue maternelle (11), et **en ce que** la zone (3a), recevant les étiquettes adhésives (7), de la feuille de papier autocollante (3') peut être enlevée en laissant les étiquettes adhésives (7) sur la feuille porte-étiquettes (5), ce pourquoi les étiquettes adhésives (7) sont séparées via une ligne poinçonnée, coupée ou perforée (24) de la feuille de papier autocollante (3') qui les entoure ou de la partie associée (3a) de la feuille de papier autocollante (3').

11. Dispositif d'apprentissage de langues étrangères selon l'une des revendications 1 à 10, **caractérisé en ce qu'**une zone ou une bande (28) est prévue ou réalisée sur la feuille porte-étiquettes (5), dans laquelle viennent se trouver les zones de préhension (23) qui sont dépourvues de couche adhésive ou dans lesquelles est prévue une feuille intermédiaire recouvrant la couche adhésive.

12. Dispositif d'apprentissage de langues étrangères selon l'une des revendications 1 à 11, **caractérisé en ce que** la zone de préhension (23) des étiquettes adhésives (7) est réalisée, à l'égard de la forme et/ou de la taille, de manière à se distinguer de la dimension en hauteur ou transversale de la zone de texte (15) des étiquettes adhésives (7).

13. Dispositif d'apprentissage de langues étrangères selon l'une des revendications 1 à 12, **caractérisé en ce que** la zone de préhension (23) est réalisée avec une coloration différente de celle de la zone de texte (15).

14. Dispositif d'apprentissage de langues étrangères selon l'une des revendications 1 à 13, **caractérisé en ce qu'**il est prévu en outre des éléments de maintien ou de support d'informations et/ou d'étiquettes (29) sur lesquels les étiquettes adhésives (7) peuvent être fixées de façon redétachable.

15. Dispositif d'apprentissage de langues étrangères selon la revendication 14, **caractérisé en ce que** les éléments de maintien d'informations ou d'étiquettes (29) sont constitués de préférence en matière plastique.

16. Dispositif d'apprentissage de langues étrangères selon l'une ou l'autre des revendications 14 et 15, **caractérisé en ce que** les éléments de maintien d'informations ou d'étiquettes (29) comprennent un tronçon d'informations (31) et un tronçon de maintien (33), le tronçon d'informations étant adapté de par sa forme et sa taille à la forme et à la taille de la zone de texte (15) des étiquettes adhésives (7).

17. Dispositif d'apprentissage de langues étrangères selon l'une des revendications 14 à 16, **caractérisé en ce que** le tronçon de maintien (33) des éléments de maintien d'informations ou d'étiquettes (29) est adapté de par sa taille et sa forme à la zone de préhension (23) des étiquettes adhésives (7).

18. Dispositif d'apprentissage de langues étrangères selon l'une des revendications 14 à 17, **caractérisé en ce que** le tronçon d'informations (31) est pourvu d'une surface de fond (35) et **en ce que** le tronçon de maintien (33) est réalisé du moins partiellement ouvert sur le côté arrière.

19. Dispositif d'apprentissage de langues étrangères selon l'une des revendications 14 à 18, **caractérisé en ce que** dans la zone du tronçon de maintien (33) sont prévues des gorges (43) au moins dans la zone périphérique partielle, qui coiffent au moins par tronçons le bord des étiquettes adhésives à fixer (7), de préférence le bord de la zone de préhension (23).

20. Dispositif d'apprentissage de langues étrangères selon l'une des revendications 14 à 19, **caractérisé en ce que** dans la zone de transition (32) du tronçon d'informations (31) vers le tronçon de maintien (33), la surface de fond du tronçon d'informations (31) est agencée en surélévation par rapport à la surface d'appui (37) dans le tronçon de maintien (33), et dans la zone de transition la surface surélevée se termine, en direction du tronçon de maintien (33), par un ou plusieurs tronçons (45) en rétrécissement de forme triangulaire et situés les uns à côté des autres.

21. Dispositif d'apprentissage de langues étrangères selon l'une des revendications 14 à 20, **caractérisé en ce que** l'élément de maintien d'informations ou d'étiquettes (29) est pourvu, sur plusieurs ses côtés, de gorges longitudinales et/ou transversales (69, 71) dans lesquelles des étiquettes non adhésives (7) peuvent venir s'enficher.

22. Dispositif d'apprentissage de langues étrangères selon la revendication 21, **caractérisé en ce que** l'élément de maintien d'informations ou d'étiquettes (29) présente une fenêtre (75) sur laquelle des gorges (69, 71) ou des barrettes coiffant (73) sont réalisées en périphérie en recevant une étiquette adhésive (7) en forme de feuille.

23. Dispositif d'apprentissage de langues étrangères selon l'une des revendications 14 à 22, **caractérisé en ce que** les éléments de maintien ou de support d'informations et/ou d'étiquettes (29) comprennent sur leur côté arrière encore un tronçon d'ancrage (47), de préférence avec une plaque de fixation (49) qui s'étend parallèlement au tronçon d'informations (31).

24. Dispositif d'apprentissage de langues étrangères selon la revendication 23, **caractérisé en ce que** la plaque de fixation (49) est reliée à la plaque de base de l'élément de maintien ou de support d'informations et/ou d'étiquettes (29) via plusieurs plots ou entretoises (51), et **en ce qu'**au moins une autre ouverture est ménagée de préférence dans la plaque de fixation (49).

25. Dispositif d'apprentissage de langues étrangères selon l'une des revendications 1 à 24, **caractérisé en ce que** les étiquettes adhésives (7) et/ou les éléments de maintien ou de support d'informations et/ou d'étiquettes (29) sont réalisé(e)s sous forme d'étiquettes vides susceptibles d'être pourvues d'une écriture ou d'une impression ou sous forme d'éléments de maintien ou de support d'informations à vide ou d'étiquettes vides.
